# EUROPEAN PATENT SPECIFICATION

(11) **EP 4 552 891 B1**
(45) Date of publication and mention of the grant of the patent: **14.10.2026**
(21) Application number: 23211709.3
(22) Date of filing: 23.11.2023
(51) Int. Cl.: B60K 25/08, B60K 7/00, B62D 59/04

(54) **MANEUVERING DRIVE SYSTEM AND VEHICLE**
MANÖVRIERENDES ANTRIEBSSYSTEM UND FAHRZEUG
SYSTÈME D'ENTRAÎNEMENT DE MAN UVRE ET VÉHICULE

(30) Priority: 10.11.2023 CN 202311502865
(43) Date of publication of application: 14.05.2025
(73) Proprietor: Carman Enterprise Co., Ltd, Hangzhou 311121 (CN)
(72) Inventor: Li, Xianwei, Hangzhou (CN)
(74) Representative: Paul & Albrecht Patentanwälte PartG mbB

(56) References cited:
- EP-A1- 2 208 661
- EP-A1- 3 718 869
- GB-A- 2 559 626
- US-A1- 2013 337 970

## Description

The present invention relates to a maneuvering drive system for a vehicle, in particular for a vehicle without its own drive, preferably for a trailer, comprising at least two, in particular exactly two drive units, which are designed to be attached to a vehicle in order to drive a wheel of the vehicle, each drive unit comprising a carrier body, a drive element, which is held rotatably about a rotation axis at the carrier body and which is designed and arranged such that it can be brought into abutment with a wheel of the vehicle to drive the vehicle, an electrical drive motor, which is mounted to the carrier body and which defines a motor axis, and transmission means, which are designed and arranged such that a rotary movement of the motor shaft of the electrical drive motor is converted into a rotary movement of the drive element.

The present invention further relates to a vehicle, in particular a vehicle without its own drive.

Vehicles without their own drive may, for example, be trailers such as caravans, boat trailers, horse trailers or the like. In the case of such vehicles, it is considered problematic that they can only be moved with difficulty by hand when they are not connected to the towing vehicle, for example a passenger car. In the case of a caravan trailer, for example, which has been disconnected from the car by which it was transported at a suitable point on a camp side, maneuvering by hand to the final parking position is very difficult.

In order to facilitate maneuvering in the disconnected state, maneuvering drive systems have been developed which can be mounted on a vehicle without its own drive. Such a maneuvering drive system usually comprises at least two drive units by means of which the wheels of the vehicle to be moved can be set in rotation. The drive units are mounted on the outside of a vehicle, usually in an area immediately in front or behind the wheels which are to be driven by the drive units. The drive units each comprise on their front side a rotatable drive element, for example a friction wheel or roller, which can be brought into a frictional contact with a wheel of the vehicle, so that rotation of the drive element causes rotation of the wheel of the vehicle. Each drive element is assigned an electrical drive motor, which is coupled to the drive element and is able to set the drive element into rotation.

Maneuvering drive systems of the type mentioned at the beginning are disclosed in US 2013/0337970 A1, GB 2559626 A, EP 2 208 661 A1 and EP 3 718 869 A1.

If, in the case of a single-axle vehicle, such a drive unit is mounted in the area of each of the two wheels or, in the case of a two-axle or multi-axle vehicle, such a drive unit is mounted in the area of each wheel of at least one of the axles, the vehicle can be comfortably moved by a user using the drive units. However, it is sometimes considered as disadvantageous that existing drive units require too much space and are too heavy which makes it difficult to mount the drive units on vehicles. Furthermore, sometimes vehicles do not offer a large amount of space near the wheels which makes it also difficult to use such maneuvering drive systems.

Based on this prior art, it is an object of the present invention to provide an alternative maneuvering drive system, which in particular avoids the above-mentioned disadvantages and has a space-saving design.

This object is solved by a maneuvering drive system mentioned at the beginning in that the drive motor is arranged outside of the drive element and the motor axis of the drive motor extends parallel to the rotation axis of the drive element, wherein, in particular, at least a part of the transmission means, preferably a planetary gear of the transmission means, is arranged radially and axially inside the drive element.

The invention is based on the consideration to provide drive units wherein the motor axis of the drive motor does not extend perpendicularly to the rotation axis of the drive element, but parallel thereto. Preferably, the motor axis of the drive motor is spaced apart from the rotation axis of the drive element. In other words, it is not necessary to provide a gear arrangement between the drive motor and the drive element wherein a motor shaft (drive motor) has another direction than an output shaft (drive element). Accordingly, it is not necessary to provide an arrangement comprising bevel gears or worm gears, which leads to a very space-saving design of the drive unit. As the drive motor extends parallel to the rotation axis of the drive element and is in particular spaced apart therefrom, it is possible to provide a gear arrangement comprising a spur gearing or a traction drive such as a geared belt drive or a chain drive. Furthermore, by providing a part of the transmission means inside the drive element, the space inside the drive element, which may be formed as a tube-shaped piece, may be used in an efficient manner. This leads to a space-saving design.

According to a preferred embodiment, the transmission means comprise a planetary gear having at least one gear stage, in particular exactly two gear stages, wherein each gear stage comprises a sun gear, a plurality of planetary gears, which are held rotatably at a planetary gear carrier, and a hollow gear, wherein the planetary gears are in engagement with the sun gear and with the hollow gear of the respective gear stage. Such a planetary gear allows to achieve a high transmission ratio. Such a high ratio is necessary between the motor axis of the drive motor and the rotation speed of the drive element as commonly an electrical motor has a comparatively high rotational speed, but a relatively low torque, whereas the drive element needs a relatively low rotational speed, but a high torque. Preferably, the planetary gear comprises or is connected to an input shaft, which is coupled to the electrical drive motor. The transmission ratio may be at least 10:1, in particular at least 15:1, preferably at least 20:1, and/or at maximum 50:1, in particular at maximum 40:1, preferably 30:1. By means of such a transmission ratio, the low momentum and high rotational speed of the motor shaft of the electrical drive motor can be converted into a low rotational speed and high torque of the drive element.

Preferably, the planetary gear is arranged axially and radially inside the drive element. Such a design leads to a considerable reduction of space required. It may be provided that the sun gear(s) and the planetary carrier(s) and the hollow gear(s) are arranged coaxially with the rotation axis of the drive element.

In concrete terms, the sun gear of a first gear stage may be coupled in a rotationally fixed manner to an input shaft, which is held rotatably at the carrier body, and the hollow gear of a last gear stage, in particular of a second gear stage of the planetary gear, is coupled in a rotationally fixed manner to the drive element. In other words, the sun gear of a first gear stage may be driven by the electrical drive motor, wherein the hollow gear of a last gear stage may serve as an output end of the planetary gear which is connected in a rotationally fixed manner to the drive element. The input shaft and the sun gear of the first gear stage may be formed in a single-piece design.

The planetary gear carrier of at least one, in particular of each gear stage may be connected in a rotationally fixed manner to the carrier body. In this way, the sun gear and the hollow gear may rotate relative to the rotation axis of the drive element, whereas the planetary gears do not rotate about the sun gear as the planetary gear carrier is connected in a rotationally fixed manner to the carrier body. Accordingly, the planetary gears rotate about a stationary rotation axis, which extends parallel to and is spaced apart from the rotation axis of the other components. Consequently, the drive element may rotate relative to the planetary gear carrier of at least one gear stage, in particular of each gear stage.

According to a preferred embodiment, the planetary gear comprises a plurality of gear stages and the hollow gear of a gear stage is coupled in a rotationally fixed manner to the sun gear of the next gear stage. In other words, the high transmission ratio desired can be achieved by providing a plurality of gear stages. As the hollow gear of each gear stage is coupled in a rotationally fixed manner to the sun gear of the next gear stage, such a high transmission ratio can be achieved.

Preferably, the planetary gear comprises a gear housing in particular in the shape of a cylinder having a circular cross-section, which gear housing is arranged axially and radially inside the drive element and which housing is connected to the carrier body in a rotationally fixed manner. Such a housing allows a pre-assembly of the planetary gear before mounting it into the drive element. This leads to an easy and safe assembly of the drive unit. The planetary gear may be formed as an assembly unit.

In concrete terms, the planetary gear carrier(s) is/are fixed in a rotationally fixed manner to the gear housing. In this way, it is possible to fix the planetary gear carrier(s) in a rotationally fixed manner the carrier body practically indirectly via the gear housing. In concrete terms, the planetary gear carrier(s) may have radially extending holes open outwardly in particular having a thread and the gear housing may have corresponding through-holes so that bolts or screws can be inserted into the holes and extend through the through-holes formed in the gear housing. In this way, a rotationally fixed connection between the respective planetary gear carrier and the gear housing can be achieved.

Furthermore, the transmission means may comprise a gearing arrangement by means of which a rotary movement of the motor shaft of the drive motor is translated into a rotary movement of a input shaft arranged concentrically to the rotation axis of the drive element. This input shaft may be an input shaft of the planetary gear. In this way, the rotation of the motor shaft can be translated to the rotation of an input shaft so that the distance between the motor axis of the electrical drive motor and the rotation axis of the drive element can be bridged.

According to a preferred embodiment, the gearing arrangement may comprise a spur gearing having a plurality of gear wheels being in engagement with each other. In other words, several gear wheels may be provided between the motor shaft and the input shaft arranged concentrically to the rotation axis of the drive element. Preferably, in total three gear wheels may be provided, wherein one gear wheel is connected in a rotationally fixed manner to the motor shaft and one other (drive) gear wheel is connected in a rotationally fixed manner to the input shaft of the planetary gear. In this case, an immediate gear wheel is arranged between the two gear wheels mentioned before, in order to transmit a rotation of the motor shaft to the input shaft.

Alternatively, the gear arrangement may comprise a traction drive, in particular a geared belt drive or a chain drive. Such a geared belt drive or chain drive allows to bridge the distance between the motor axis of the electrical drive motor and the rotation axis of the drive element in a very efficient, space- and weight-saving way.

In order to avoid an unintended movement of the drive element, the drive unit may further comprise a brake mechanism, which is designed and arranged to block selectively a movement of the drive element. This embodiment is based on the consideration to ensure that no unintended movement of the drive element and thus of the vehicle to which the maneuvering drive system is attached, is possible.

The brake mechanism may be arranged axially and radially inside the drive element. Such an embodiment leads to a very space- and weight-saving design of the drive units.

Preferably, the brake mechanism is formed as or comprises an electromagnetic break. The brake mechanism may be formed such that the brake is switched off when an electrical current or tension is applied.

The brake mechanism may be formed as a friction brake. In concrete terms, the brake mechanism may comprise a movable friction plate, which is mounted in a rotationally fixed manner to the carrier body, and a friction disc, which is mounted in a rotationally fixed manner to an input shaft, in particular on an input shaft of a planetary gear, or is formed in a single-piece design with an input shaft, wherein the friction plate can be moved between a release position, in which the friction plate is not in contact with the friction disc so that the input shaft can rotate, and a blocking position, in which the friction plate presses against the friction disc, in particular presses the friction disc against a counter plate, which is connected in a rotationally fixed manner to the carrier body, in order to block a rotary movement of the input shaft and consequently of the drive element. In other words, the brake mechanism comprises at least two elements, namely a movable friction plate, which is held in a rotationally fixed manner on the carrier body and thus cannot rotate about the rotation axis of the drive element, and a friction disc, which always rotates in the same manner as the input shaft. If the friction plate is in its release position, it is not in contact with the friction disc. In this position, the input shaft can rotate freely so that the drive element can be set in rotation. In its blocking position, the friction plate presses against the friction disc, in particular presses the friction disc against a counter plate, so that, by means of the friction between the components, a rotation of the input shaft and consequently of the drive element is safely avoided.

Preferably, the friction plate is biased towards its blocking position, in particular by means of spring elements. Such an embodiment ensures that, in particular at an electromagnetic break, when no current or tension is applied, a movement of the input shaft and consequently of the drive element is safely avoided. Actuating means may be provided, in particular in the form of a coil arrangement, in order to move the friction plate towards its release position. Accordingly, only when an electrical current or tension is applied to the coil arrangement, the friction plate can move towards its release position. Preferably, the moveable friction plate is made of a ferromagnetic material. The counter plate may be connected to the coil arrangement in a rotationally fixed manner, in particular via connecting bolts extending axially and engaging through the movable friction disc.

According to a preferred embodiment, the carrier body comprises a C-shaped section, wherein the drive element is rotatably held between the C-legs. In this way, a robust and stable design of the carrier body and of the drive units can be achieved. Preferably, the outer circumferential surface of the drive element protrudes from the C-legs. In particular, the circumferential surface of the drive element protrudes from the C-legs in a direction towards the wheels of a vehicle when the drive unit is mounted to a vehicle. In this way, the drive element can also drive wheels which are larger than the length of the drive element.

The C-legs of the C-shaped section of the carrier body may be directed towards the wheel of a vehicle to be driven, when mounted to a vehicle. The carrier body may comprise an in particular basically rectangular frame, which may be formed by a bar and may carry different components. This frame may form an interior space, in which several components, for example the electrical drive motor, is arranged. Consequently, the gearing arrangement may be formed outside of the frame. The interior space may be covered towards its upper side by a cover element. A segment of the rectangular frame may form the central leg of the C-shaped section.

The electrical drive motor may be a brushless motor and/or may have an external rotor. Brushless motors are characterized by a high power-to-weight-ratio and low maintenance efforts. Motors having brushes have the tendency to break as the brushes are subjected to wearing. Furthermore, a brushless motor does not need a tolerance gap between the power brushes so it has per se a higher power efficiency. An external rotor leads to a high power to weight ratio.

The maneuvering drive system, in particular each drive unit may further comprise a battery, which is in particular designed to be rechargeable, for supplying the drive unit with electrical energy. Preferably, the battery is designed to supply an electrical voltage for operation of the drive motor of more than 12V, in particular an electrical voltage of 24V, 36V or 48V. In this way, it is possible to increase the output power of the motor and/or to design the drive units in a very space-saving way. Power losses in cables may be reduced by such a voltage of more than the standard voltage of 12V. It has been proven in particular advantageous if the electrical voltage supplied by the battery and used for the operation of the drive motor is 36V. On one hand, such a voltage is not dangerous for the human body when a person comes accidentally into contact with the non-isolated components. On the other hand, such a voltage, which is three times the voltage at which common drive units operate, leads to a significant reduction of power losses. In addition, electronic parts such as cables, switches, connectors etc. can be adapted to a lower current specification, which is also an economic advantage. Also, a voltage of 36V is easy to achieve by combining standard DC-batteries supplying a voltage of 12V. Summarizing, a voltage of 36V is optimized in particular in respect to safety, economic and efficiency issues.

Each drive unit may comprise a control device in particular having a communication module, which control device is fixed to or integrated into the drive unit. Preferably, the control device is directly connected to a battery. A control device is used to regulate the rotation of the drive motor. A communication module can be arranged such that it is able to communicate with a remote control unit connected by cable or by wireless connection. The control device may be arranged directly adjacent to the battery so that the cables between the battery and the control device are short which keeps the power losses in these cables low. A rotor information detection device detecting the current position or rotational speed of the drive motor may be connected to the control device. It is also possible to provide electrical drive motors without a rotor information detection device such as hall-sensors.

According to a preferred embodiment, a polarity control unit may be integrated into the control device, wherein the polarity control unit is designed to regulate the direction and speed of rotation of the drive motor by changing the polarity. Preferably, the control device and the battery are integrated into one common housing. Consequently, the control device in particular comprising a polarity control unit and the battery can form an integrated unit in the drive unit, wherein they may be arranged in one common housing.

The maneuvering drive system may be arranged that one remote control unit is able to communicate with a plurality of drive units at the same time. In other words, each control device may be able to communicate directly with a remote control unit. Accordingly, a direct communication path can be established between one remote control unit and the control devices of all, in particular both drive units. Such an arrangement leads to only a low delay during communication.

Alternatively, the control device of one drive unit may be formed as a master control device, which is able to communicate with a remote control, and the control device(s) of the other drive unit is/are formed as slave control device(s) so that it is/they are able to communicate with the master control device in order to get instructions from the latter. In other words, the control device of one drive unit serves as a master control device and the control device of the other drive units serves as a slave device. Accordingly, a communication signal from a remote control unit is at first transmitted to the master control device and from the master control device to the slave device/devices. This design may allow to use a Bluetooth connection between the remote control unit and the master control device. The maneuvering drive system may comprise a remote control unit which is able to communicate with one or a plurality of control devices of drive units.

In addition, an infeed device may be assigned to each drive unit, wherein the infeed device can bring the drive unit into a frictional and driving contact between its drive element and the wheel of vehicle to be driven, in particular by a guided linear or pivoting movement. By means of such an infeed device, it is possible that the maneuvering drive system remains permanently at the vehicle to be driven. Accordingly, the drive elements are only brought in contact with the corresponding wheel of the vehicle to be driven, when the vehicle should be moved. If the vehicle to be driven, for example a trailer, is connected to a passenger car and moved, the drive elements can be brought out of engagement from the wheel of the vehicle.

According to a preferred embodiment, the infeed device may comprise a spindle drive with a spindle shaft and a spindle nut, by means of which the drive unit can be brought into a frictional and driving contact between the drive element and the wheel of the vehicle to be driven. In other words, the spindle can be rotated in order to move the drive unit, which is connected to the spindle nut, towards a frictional and driving contact out of a frictional and driving contact.

Preferably, the infeed device comprises an infeed motor by means of which the infeed movement can be carried out in a motorized manner. In order to control the infeed device, the infeed motor can be connected to the control device associated with the respective drive unit. The infeed motor may be supplied by the battery. Accordingly, the infeed motor may be able to be operated at an electrical voltage of more than 12V, in particular at an electrical voltage of 24, 36 or 48V.

In order to protect the infeed motor against external influences, in particular against dirt and dust, the infeed device may comprise a weather-resistant and/or water tight infeed housing, which surrounds at least the infeed motor.

Alternatively, the infeed device may comprise actuating means for manually actuating the movement of the drive unit. In particular, the actuating means may comprise an engagement contour in order to bring a corresponding tool into engagement for rotating the spindle shaft. The engagement contour may be directly connected or formed in a single-piece design with the spindle shaft. It is also possible that an intermediate gear is provided, which may be formed as a bevel gear, in order to facilitate the access to the engagement contour for the operator, for rotating the spindle shaft.

The object mentioned above is also solved by a vehicle, in particular a vehicle without its own drive, comprising a maneuvering drive system as described about.

Further features and advantages of the present invention will become clear by the following description of an embodiment of a maneuvering drive system according to the invention with reference to the enclosed drawing. In the drawing shows:
- Figure 1: a vehicle according to the invention comprising a maneuvering drive system in a perspective view;
- Figure 2: a drive unit of the maneuvering drive system in a perspective view;
- Figure 3: the drive unit of figure 2 in another perspective view;
- Figure 4: the drive unit of figure 2 in a partial cross-sectional perspective view;
- Figure 5: the drive element of the drive unit of figure 2 with components arranged therein in a partial cross-sectional perspective view;
- Figure 6: the drive element shown in figure 5 with components arranged therein in an explosive view;
- Figure 7: the brake mechanism of the drive unit in a side view, wherein the friction plate is in its blocking position;
- Figure 8: the brake mechanism shown in figure 7 in a longitudinal cross-sectional view, wherein the friction plate is in its blocking position;
- Figure 9: the brake mechanism in a side view, wherein the friction plate is in its release position;
- Figure 10: the brake mechanism in a longitudinal cross-sectional view, wherein the friction plate is in its release position;
- Figure 11: the planetary gear of the drive unit in a partial cross-sectional perspective view;
- Figure 12: the planetary gear shown in figure 11 in another partial cross-sectional perspective view;
- Figure 13: the planetary gear shown in figures 11 and 12 in an exploded view;
- Figure 14: the planetary gear and an output shaft in a perspective view;
- Figure 15: the drive unit of figure 2 in a perspective view from the bottom;
- Figure 16: another embodiment of the drive unit in a perspective view;
- Figure 17: the drive unit of figure 16 in another perspective view; and
- Figure 18: a method for operating the maneuvering drive system in a schematical view.

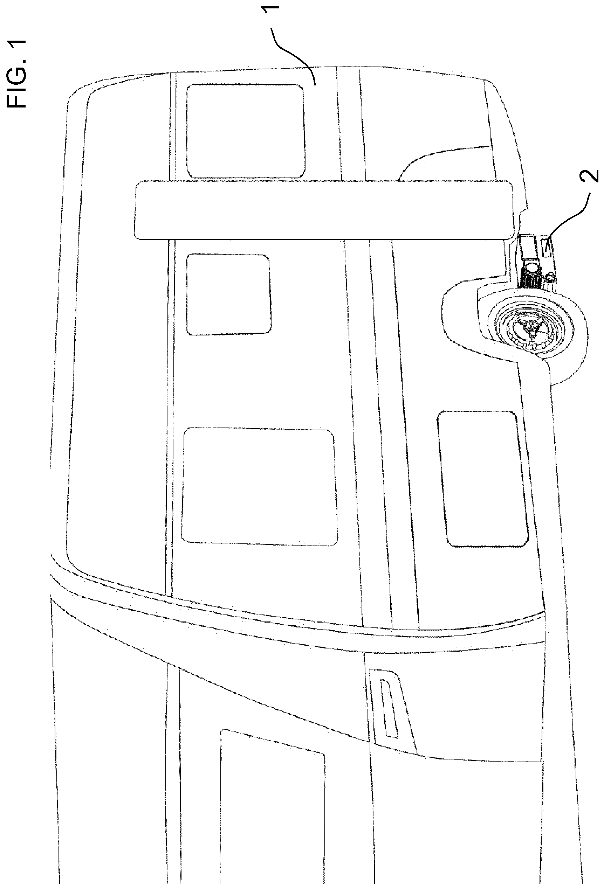

Figure 1 shows a vehicle, presently a caravan trailer 1, without its own drive. The caravan trailer 1 is a single-axle trailer so that it has total two wheels. As it is visible on figure 1, the caravan-trailer 1 comprises a maneuvering drive system 2 according to the invention. The maneuvering drive system 2 comprises exactly two drive units 3, which are attached to the caravan-trailer 1 in order to drive a wheel of the trailer 1.

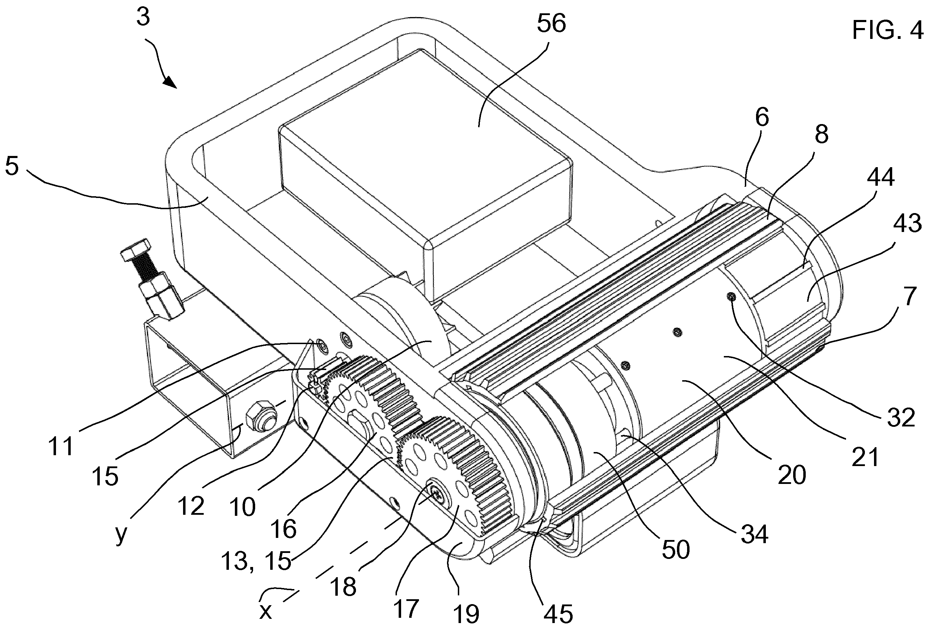

In concrete terms, each drive unit 3 comprises a carrier body 4, which can in particular be seen in figure 4. This carrier body 4 comprises a basically rectangular frame 5, which is formed by a bar and carries different components. Furthermore, the carrier body 4 comprises a C-shaped section 6, which is arranged towards the wheel of the caravan trailer 1 when the drive unit 3 mounted to the vehicle. Presently, the central leg of the C-shaped section 6 is formed by a segment of the rectangular frame 5.

Each drive unit 3 further comprises a drive element 7 in the form of a roller. The drive element 7 has over its circumferential surface grooves 8 extending in the longitudinal direction of the drive element 7 in order to enhance the grip with a wheel of the vehicle when the drive element 7 is in contact therewith.

The drive element 7 is held rotatably about a rotation axis X at the carrier body 4, in concrete terms between the C-legs 9 of the carrier body 4. The outer circumferential surface of the drive element 7 protrudes from the C-legs 9.

Furthermore, each drive unit 3 comprises an electrical drive motor 10, which is a brushless motor and has an external rotor. The drive motor 10 is mounted to the carrier body 4, in concrete terms to a section of the basically rectangular frame 5 from the inside by means of several mounting screws 11. The drive motor 10 defines a motor axis Y, which is spaced apart from the rotation axis X of the drive element 7 and extends parallel to the rotation axis X.

Each drive unit 3 further comprises transmission means, which are designed and arranged such that a rotary movement of the motor shaft 12 of the electrical drive motor 10 is converted into a rotary movement of the drive element 7. For this purpose, the transmission means comprise a gearing arrangement 13. This gearing arrangement 13 comprises a spur gearing 14 having presently in total three gear wheels 15, 16, 17 being in engagement with each other. The spur gearing 14 is arranged outside the rectangular frame 15. For this purpose, the motor shaft 12 of the drive motor 10 engages through an opening formed in the rectangular frame 5. The shaft 12 is connected in a rotationally fixed manner to a first gear wheel 15 having a comparatively low number of teeth. The first gear wheel 15 is in engagement with an intermediate gear wheel 16, which is held rotatably, for example by means of corresponding bearings, in particular roller bearings, at the carrier body 4. The intermediate gear wheel 16 is in engagement with a drive gear wheel 17. This drive gear wheel 17 is held rotatably at the carrier body 4, wherein the rotation axis of the drive gear wheel 17 extends coaxially with the rotation axis X of the drive element 7. The drive gear wheel 17 is mounted in a rotationally fixed manner to an input shaft 18 arranged concentrically to the rotation axis X of the drive element 7. In this way, a rotary movement of the motor shaft 12 is translated into a rotary movement of the input shaft 18. The drive gear wheel 17 has a comparatively high number of teeth, so the speed of rotation of the input shaft 18 is reduced compared to the speed of rotation of the motor shaft 12. In order to protect the spur gearing 14 against external influences, in particular against dirt and dust, a spur gearing housing 19 is provided which, preferably, is mounted to the carrier body 4, in particular by means of a plurality of screws.

The input shaft 18 is beared at the carrier body 4, in particular at a C-leg 9 thereof, by means of a roller bearing (not visible). In order to transmit a rotary movement towards the drive element 7, the input shaft 18 extends radially and axially inside the drive element 7.

The transmission means further comprise a planetary gear 20 having exactly two gear stages. The planetary gear 20 comprises a gear housing 21 in the shape of a cylinder having a circular cross-section. This gear housing 21 is arranged axially and radially inside the drive element 7.

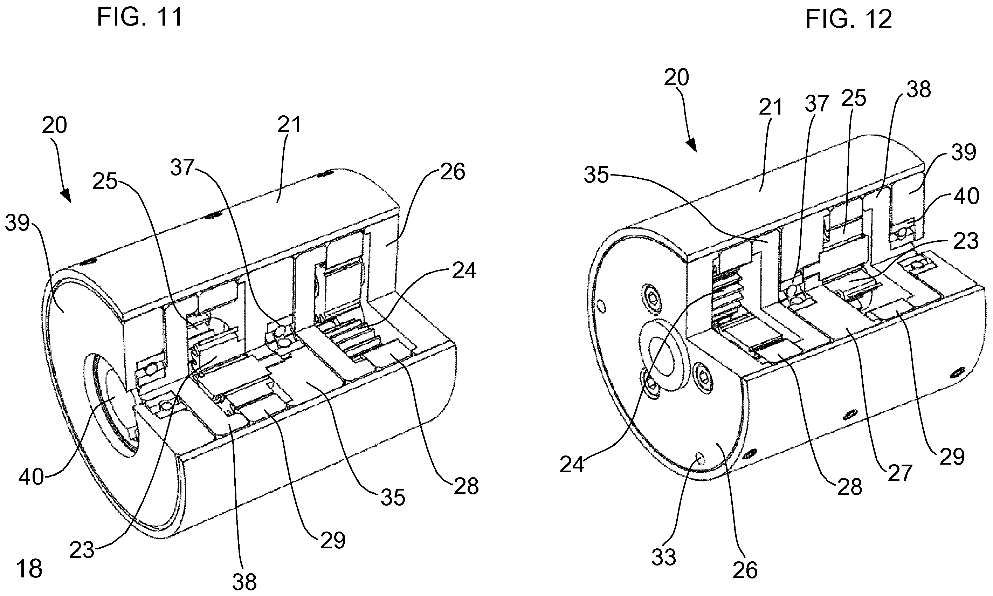

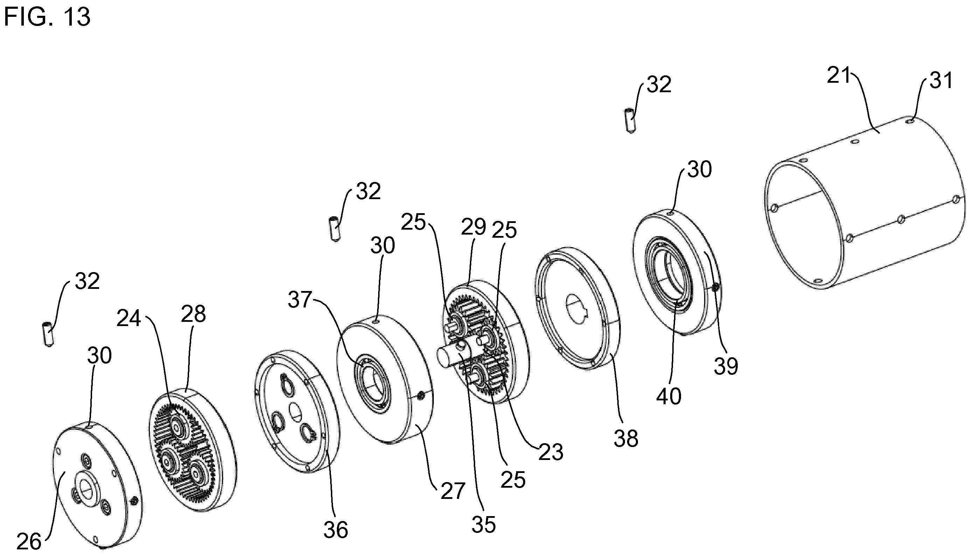

As it is in particular visible in figures 11 to 13, each gear stage comprises a sun gear 22, 23, a plurality of planetary gears 24, 25, which are held rotatably at a corresponding planetary gear carrier 26, 27, and a hollow gear 28, 29. The sun gears 22, 23, the planetary gear carriers 26, 27 and the hollow gears 28, 29 are arranged coaxially with the rotation axis X of the drive element 7.

The first planetary gear carrier 26 is formed as a disc, which ends flush with the planetary gear housing 21 at one axial end. The first planetary gear carrier 26 is connected in a rotationally fixed manner to the gear housing 21. In concrete terms, the planetary gear carrier 26 has radially extending holes open outwardly having a thread 30 and the gear housing 21 has corresponding through-holes 31 so that holding screws 32 can be screwed into the threads 30 and extend through the through-holes 31 so that a rotationally fixed connection between the planetary gear carrier 26 and the gear housing 21 is achieved.

Furthermore, the first planetary gear carrier 26 has a central opening, through which the input shaft 18 extends. The first sun gear 22 is formed in a single-piece design with the input shaft 18.

The first planetary gear carrier 26 further comprises fixing holes 33 which extend axially and into which corresponding fixing bolts 34, for example in the form of screws, extend in order to connect the first planetary gear carrier 26 and thus the gear housing 21 to the carrier body 4 in a rotationally fixed manner.

The first hollow gear 28 can rotate freely relative to the gear housing 21 and thus the carrier body 4. The first hollow gear 28 is connected in a rotationally fixed manner to an intermediate disc 35, in concrete terms via plurality of screws extending axially through the intermediate disc 35 and the first hollow gear 28. The intermediate disc 35 is connected in a rotationally fixed manner via an intermediate shaft 36 to the second sun gear 23. For this purpose, the intermediate shaft 36 is beared by means of roller bearing 37 inside the second planetary gear carrier 27. The second planetary gear carrier 27 carrying in total three planetary gears 25 is held in a rotationally fixed manner at the gear housing 21 in the manner described above in context with the first planetary gear carrier 26.

The second hollow gear 29 is connected to a second intermediate disc 38 in a rotationally fixed manner by means of a plurality of screws extending in the axial direction. The second intermediate disc 38 is beared rotatably in an end plate 39, which ends flush with the gear housing 21 at one end and is connected to the gear housing 21 as described in context with the planetary gear carriers 26, 27, by means of a roller bearing 40. The second intermediate disc 38 is connected in a rotationally fixed manner to an output shaft 41 which extends axially beyond the drive element 7 and is beared in the C-leg 9 of the carrier body 4. This bearing is realized by means of a roller bearing 42 mounted in the C-leg 9.

The output shaft 41 is connected in a rotationally fixed manner to a coupling element 43, which has, on its outer circumferential surface, a plurality of protrusions 44 extending in the longitudinal direction of the drive element 7 and engaging into corresponding drive grooves 45 formed in the inner circumferential surface of the drive element 7.

The different rotationally fixed connections can be realized in a manner known per se, for example as a form-fit connection, in particular by means of a feather key connection. The coupling element 43 has an opening having a quadratic cross-section and the output shaft 41 has a section having a corresponding quadratic cross-section so that a form-fit connection is realized.

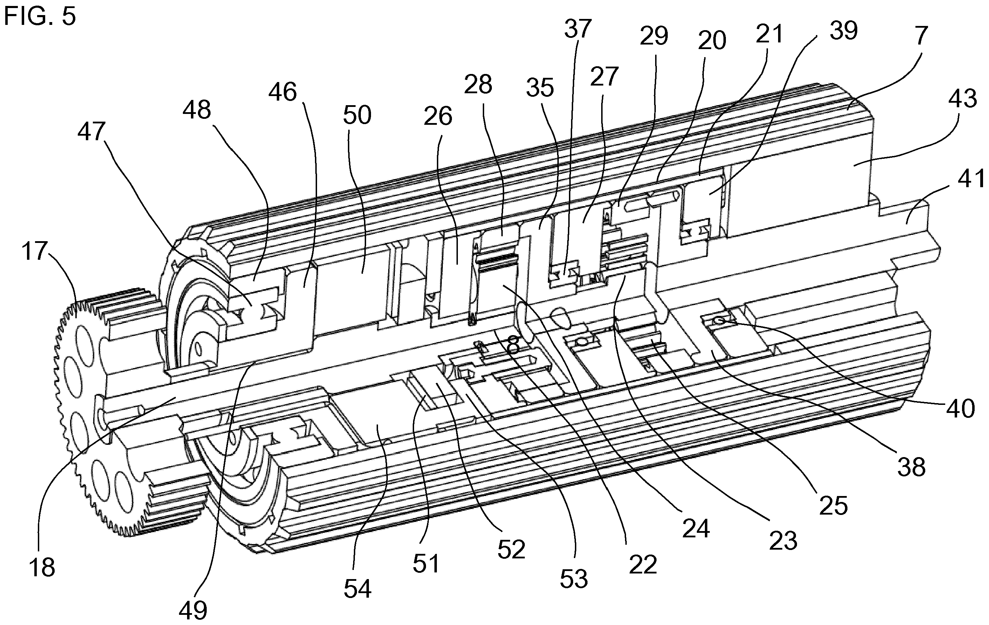

At one and (on the right side in figure 5), the drive element 7 is held rotatably at a C-leg 9 of the carrier body 4 via the input shaft 18, which is held rotatably by means of a roller bearing. On the left side in figure 5, a basic element 46 is provided, which is formed as a turned part having a cross-section in the form of an L and is mounted by means of several screws to the C-leg 9 of the carrier body 4. A roller bearing 47 is provided between the basic element 46 and an intermediate element 48, which supports the drive element 7. The basic element 46 has a central through-opening 49, through which the input shaft 18 extends without being in contact with the basic element 46, i.e. there is a radial gap between the basic element 46 and the input shaft 18. Thus, the input shaft 18 can rotate relative to the basic element 46.

Each drive unit 3 further comprises a brake mechanism 50, which is designed and arranged to block selectively a movement of the drive element 7. The brake mechanism 50 is arranged axially and radially inside the drive element 7, in concrete terms axially between the basic element 46 and the planetary gear 20. Presently, the brake mechanism 50 is formed as an electromagnetic brake.

In detail, the brake mechanism 50 comprises a movable friction plate 51, which is mounted in a rotationally fixed manner to the carrier body 4. In concrete terms, the corresponding fixing bolts 34 in particular in the form of screws extend through the basic element 46 and through corresponding openings formed in the moveable friction plate 51. In this way, a rotationally fixed connection between the moveable friction plate 51 and finally the carrier body 4 is achieved.

The brake mechanism 50 further comprises a friction disc 52, which is mounted in a rotationally fixed manner to the input shaft 18. For this purpose, a form-fit connection between the friction disc 52 and the input shaft 18 is provided. The brake mechanism 50 also comprises a counter plate 53, which is connected in a rotationally fixed manner to the carrier body 4, also via the fixing bolts 34, and which is positioned axially in particular by being in flat contact with the first planetary gear carrier 26 of the planetary gear 20.

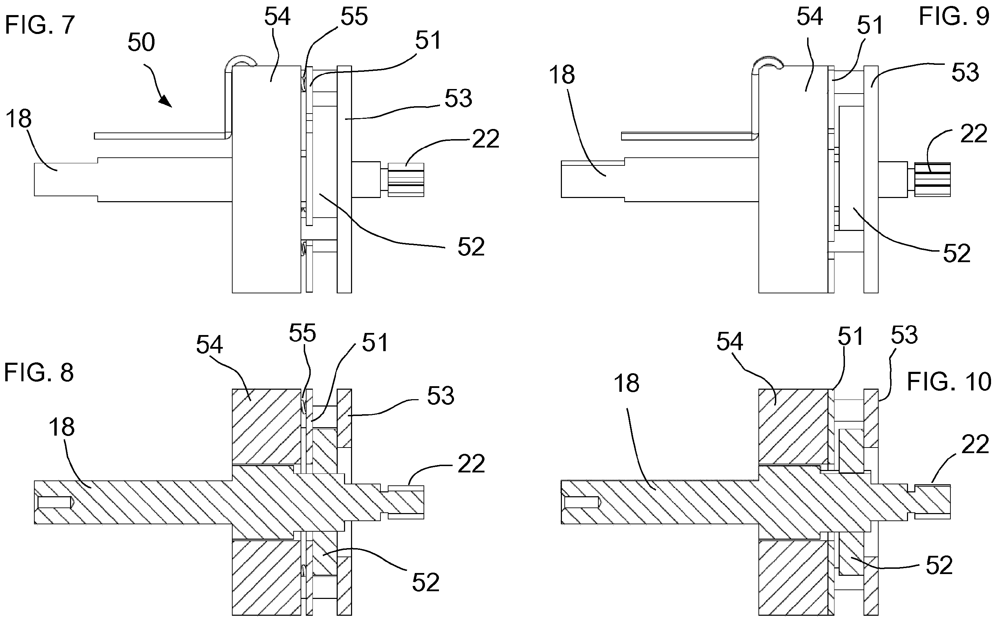

The movable friction plate 51 can be moved between a release position, which is shown in figures 9 and 10, and a blocking position, which is shown in figures 7 and 8. When the friction plate 51 is in its release position, the friction plate 51 is not in contact with the friction disc 52, so that the input shaft 18 can rotate. When the friction plate 51 is in its blocking position, the friction plate 51 presses against the friction disc 52, presently presses the friction disc 52 against the counter plate 53, in order to block a rotary movement of the input shaft 18 and consequently of the drive element 7.

The brake mechanism 50 further comprises actuating means in the form a coil arrangement 54, in order to move the friction plate 48 towards its release position. The friction plate 51 is biased towards its blocking position by means of a plurality of spring elements 55 being spaced apart over the circumference. In this way, the rotary movement of the drive element 7 can be blocked and released selectively.

Furthermore, each drive unit 3 comprises a control device 56 which is also arranged inside the rectangular frame 5 of the carrier body 4. Each control device 56 is connected to a battery, which is not shown in the figures as a separate component, which battery is able to supply electrical energy at a voltage of 36 V for the drive motor.

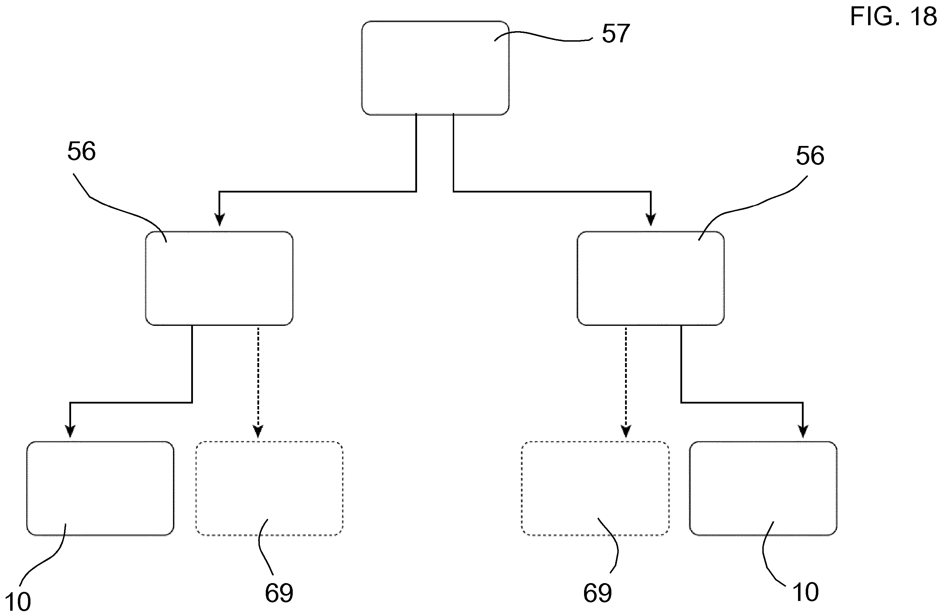

Presently, as it is shown in figure 18 for example, the maneuvering drive system is arranged such that one remote control unit 57 is able to communicate with both drive units 3 at the same time. Accordingly, a direct communication path can be established between one remote control unit 57 and the control devices 56 of both drive units 3.

In addition, an infeed device 58 is assigned to each drive unit. The infeed device 58 can bring the drive unit 3 into a frictional and driving contact between its drive element 7 and the wheel of the vehicle 1 to be driven, presently by a guided linear movement.

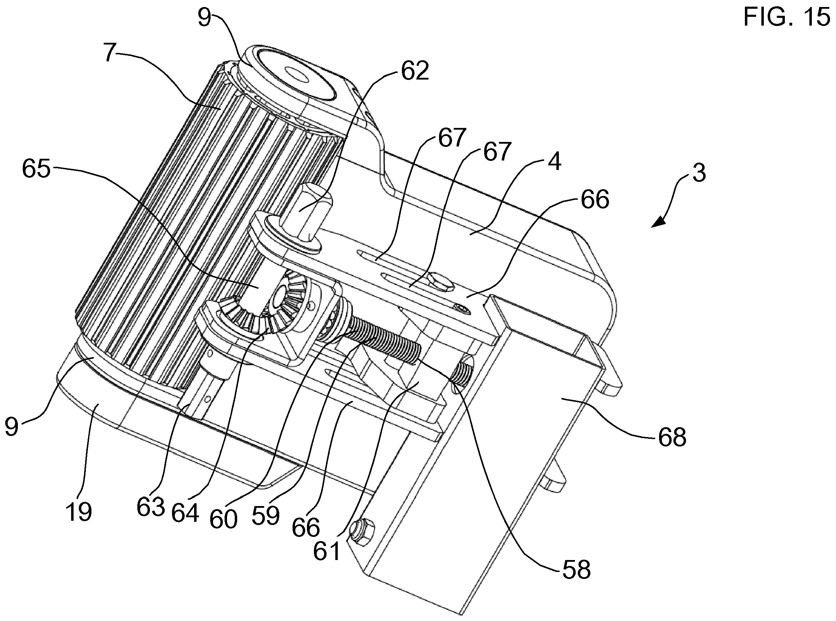

As it is visible in particular in figure 15, the infeed device 58 comprises a spindle drive 59 with a spindle shaft 60 and a spindle nut 61 by means of which the drive unit 3 can be brought into a frictional driving contact. The spindle nut 61 is connected to the drive unit 3. Presently, the infeed device 58 comprises actuating means for manually actuating the movement of the drive unit 3. The actuating means comprise a first engagement contour 62 having a hexagonal shape and a second engagement contour 63 having a quadratic cross-section. An intermediate gear 64, presently formed as a bevel gear, is provided in order to facilitate the access to the engagement contours 62, 63 for the operator for rotating the spindle. The first engagement contour 62 and the second engagement contour 63 are formed at an engagement shaft 65 which extends parallel to the rotation axis X of the drive unit 3. The engagement shaft 65 is held at two holding profiles 66, which have oblong holes 67 in order to guide the movement of the drive unit 3 relative to the holding profiles 66. Furthermore, the holding profiles 66 are connected to a basic profile 68 connecting the two drive units.

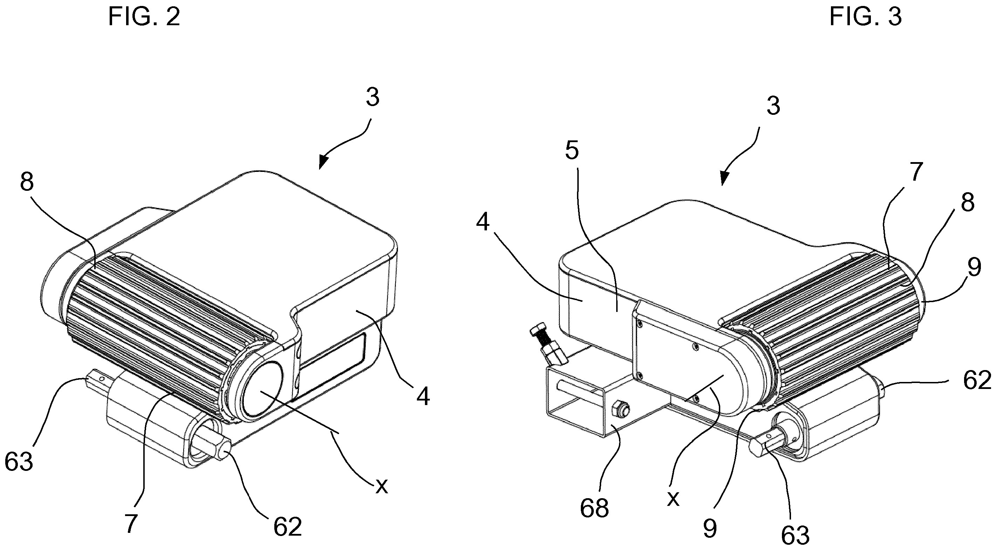

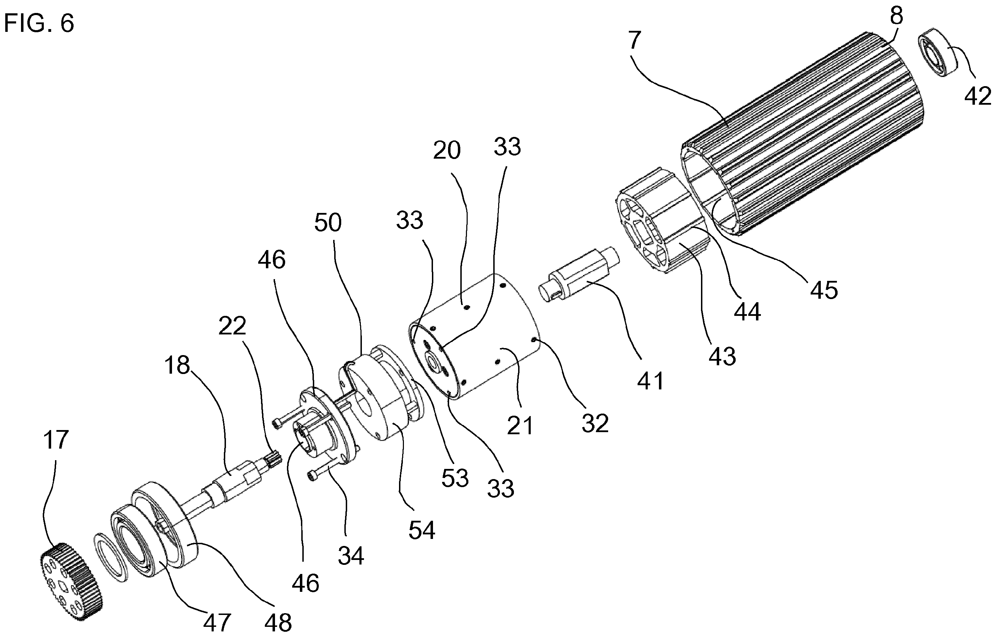

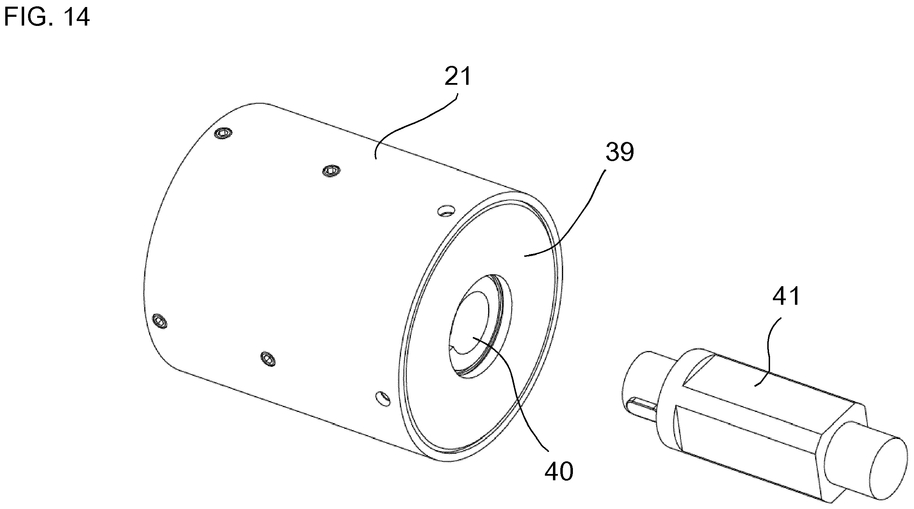

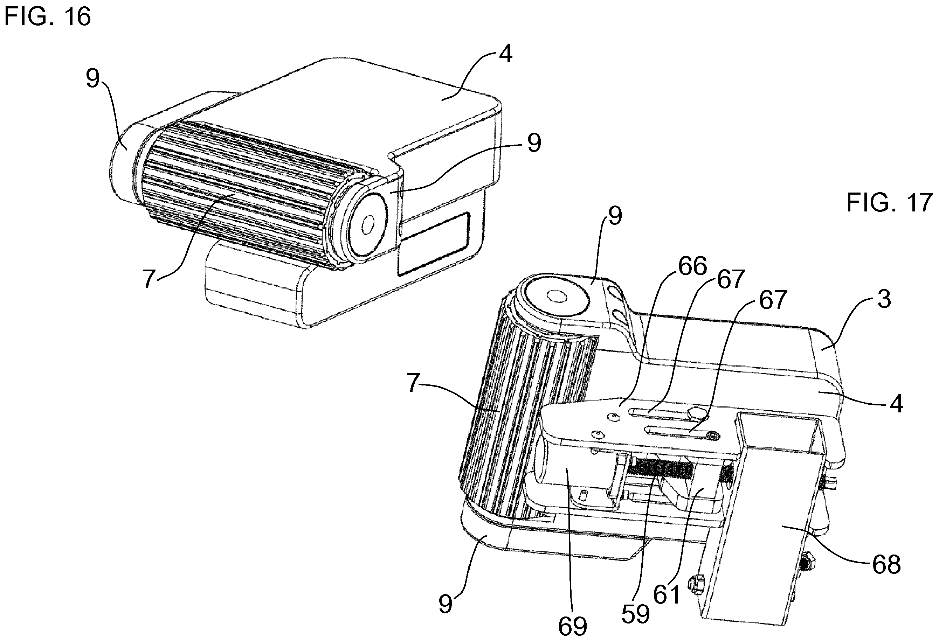

The embodiment of the drive unit shown in figures 16 and 17 differs from the embodiment of the figures 1 to 15 only in that a manual actuating of the movement of the drive unit is not provided, but the infeed device 58 comprises an infeed motor 69, which is connected to the spindle in order to move the drive unit 3 relative to the basic profile 68. Each infeed motor 69 is connected to the corresponding control device, as it is visible with dashed lines in figure 18.

By means of the planetary gear 20, which allows a high transmission ratio, arranged inside the drive element 7 and the brake mechanism arranged also the drive element 7, a very space- and weight-saving design of the drive units 3 can be achieved, in particular in context with a drive motor 10 the motor axis Y of which is arranged parallel to the rotation axis X of the drive element 7.

### Reference signs list

- 1: caravan trailer
- 2: maneuvering drive system
- 3: drive unit
- 4: carrier body
- 5: rectangular frame
- 6: C-shaped section
- 7: drive element
- 8: groove
- 9: C-leg
- 10: drive motor
- 11: mounting screws
- 12: shaft
- 13: gearing arrangement
- 14: spur gearing
- 15: first gear wheel
- 16: intermediate gear wheel
- 17: drive gear wheel
- 18: input shaft
- 19: spear gearing housing
- 20: planetary gear
- 21: gear housing
- 22: first sun gear
- 23: second sun gear
- 24: first planetary gear
- 25: second planetary gear
- 26: first planetary gear carrier
- 27: second planetary gear carrier
- 28: first hollow gear
- 29: second hollow gear
- 30: thread
- 31: through-hole
- 32: holding screw
- 33: fixing hole
- 34: fixing bolt
- 35: first intermediate disc
- 36: intermediate shaft
- 37: roller bearing
- 38: second intermediate disc
- 39: end plate
- 40: roller bearing
- 41: output shaft
- 42: roller bearing
- 43: coupling element
- 44: protrusion
- 45: drive groove
- 46: basic element
- 47: roller bearing
- 48: intermediate element
- 49: through-opening
- 50: brake mechanism
- 51: movable friction plate
- 52: friction disc
- 53: counter plate
- 54: coil arrangement
- 55: spring element
- 56: control device
- 57: remote control unit
- 58: infeed device
- 59: spindle drive
- 60: spindle shaft
- 61: spindle nut
- 62: first engagement contour
- 63: second engagement contour
- 64: intermediate gear
- 65: engagement shaft
- 66: holding profile
- 67: oblong hole
- 68: basic profile
- 69: infeed motor
- X: rotation axis
- Y: motor axis

## Claims

1. Maneuvering drive system (2) for a vehicle, in particular for a vehicle without its own drive, preferably for a trailer, comprising at least two, in particular exactly two drive units (3), which are designed to be attached to a vehicle in order to drive a wheel of the vehicle, each drive unit (3) comprising
- a carrier body (4),
- a drive element (7), which is held rotatably about a rotation axis (X) at the carrier body (4) and which is designed and arranged such that it can be brought into abutment with a wheel of the vehicle to drive the vehicle,
- an electrical drive motor (10), which is mounted to the carrier body (4) and which defines a motor axis (Y),
- transmission means, which are designed and arranged such that a rotary movement of the motor shaft (12) of the electrical drive motor (10) is converted into a rotary movement of the drive element (7),
wherein the drive motor (10) is arranged outside of the drive element (7) and the motor axis (Y) of the drive motor (10) extends parallel to the rotation axis (X) of the drive element (7), **characterized in that at** least a part of the transmission means, in particular a planetary gear (20) of the transmission means, is arranged radially and axially inside the drive element (7).

2. Maneuvering drive system (2) according to claim 1, **characterized in that** the transmission means comprise a planetary gear (20) having at least one gear stage, in particular exactly two gear stages, wherein each gear stage comprises a sun gear, a plurality of planetary gears (20), which are held rotatably at a planetary gear carrier (26, 27), and a hollow gear, wherein the planetary gears (20) are in engagement with the sun gear and with the hollow gear of the respective gear stage.

3. Maneuvering drive system (2) according to claim 2, **characterized in that** the planetary gear (20) is arranged axially and radially inside the drive element (7), and/or **in that** the sun gear(s) and the planetary carrier(s) and the hollow gear(s) are arranged coaxially with the rotation axis (X) of the drive element (7), and/or **in that** the sun gear (22) of a first gear stage is coupled in a rotationally fixed manner to an input shaft (18), which is held rotatably at the carrier body (4), and the hollow gear (29) of a last gear stage, in particular of a second gear stage of the planetary gear (20) is coupled in a rotationally fixed manner to the drive element (7).

4. Maneuvering drive system (2) according to claim 2 or 3, **characterized in that** the planetary gear carrier (26, 27) of each gear stage is connected in a rotationally fixed manner to the carrier body (4).

5. Maneuvering drive system (2) according to any of claims 2 to 4, **characterized in that** the planetary gear comprises a plurality of gear stages and the hollow gear (29) of a gear stage is coupled in a rotationally fixed manner to the sun gear (23) of the next gear stage.

6. Maneuvering drive system (2) according to any of claims 2 to 5, **characterized in that** the planetary gear (20) comprises a gear housing (21) in particular in the shape of a cylinder having a circular cross-section, which gear housing (21) is arranged axially and radially inside the drive element (7) and which housing is connected to the carrier body (4) in a rotationally fixed manner.

7. Maneuvering drive system (2) according to claim 4 and claim 6, **characterized in that** the planetary gear carrier(s) (26, 27) is/are fixed in a rotationally fixed manner to the gear housing (21).

8. Maneuvering drive system (2) according to any of the preceding claims, **characterized in that the** transmission means comprise a gearing arrangement (13) by means of which a rotary movement of the motor shaft (12) of the drive motor (10) is translated into a rotary movement of a drive shaft (18) arranged concentrically to the rotation axis (X) of the drive element (7), wherein, in particular, the gearing arrangement (13) comprises a spur gearing (14) having a plurality of gear wheels (15, 16, 17) being in engagement with each other, and/or wherein, in particular, the gearing arrangement (13) comprises a traction drive, in particular a geared belt drive or a chain drive.

9. Maneuvering drive system (2) according to any of the preceding claims, **characterized in that** it further comprises a brake mechanism (50), which is designed and arranged to block selectively a movement of the drive element (7), wherein, in particular, the brake mechanism (50) is arranged axially and radially inside the drive element (7), and/or wherein, in particular, the brake mechanism (50) is formed as or comprises an electromagnetic brake.

10. Maneuvering drive system (2) according to claim 9, **characterized in that** the brake mechanism (50) comprises a movable friction plate (51), which is mounted in a rotationally fixed manner on the carrier body (4), and a friction disc (52), which is mounted in a rotationally fixed manner on an input shaft (18), in particular on an input shaft (18) of a planetary gear (20), or is formed in a single-piece design with an input shaft (18), wherein the friction plate (51) can be moved between a release position, in which the friction plate (51) is not in contact with the friction disc (52) so that the input shaft (18) can rotate, and a blocking position, in which the friction plate (51) presses against the friction disc (52), in particular presses the friction disc (52) against a counter plate (53), which is connected in a rotationally fixed manner to the carrier body (4), in order to block a rotary movement of the input shaft (18) and consequently of the drive element (7), wherein, in particular, the friction plate (51) is biased towards its blocking position, in particular by means of spring elements (55), and/or wherein, in particular, actuating means are provided, preferably in the form of a coil arrangement (54), in order to move the friction plate (51) towards its release position.

11. Maneuvering drive system (2) according to any of the preceding claims, **characterized in that** the carrier body (4) comprises a C-shaped section (6), wherein the drive element (7) is rotatably held between the C-legs (9) and/or the outer circumferential surface of the drive element (7) protrudes from the C-legs (9), and/or **in that** the electrical drive motor (10) is a brushless motor and/or has an external rotor, and/or **in that** the drive motor (10) does not have a rotor information detection device such as hall sensors, and/or **in that** each drive unit (3) comprises a control device (56) in particular having a communication module, which control device (56) is fixed to or integrated into the drive unit (3), wherein, in particular, the control device (56) is directly connected to a battery, and/or wherein, in particular, the control device (56) of one drive unit (3) is formed as a master control device (56), which is able to communicate with a remote control unit (57), and a control device(s) (56) of the other drive unit(s) (3) is/are formed as slave control device(s) (56) so that it is/they are able to communicate with the master control device (56) in order to get instructions from the latter, and/or wherein, in particular, each control device (56) is able to communicate directly with a remote control unit (57).

12. Maneuvering drive system (2) according to claim 11, **characterized in that** the electrical device motor (10) is a brushless motor which has an external rotor, wherein the brushless motor preferably does not have a rotor information detection such as hall sensors.

13. Maneuvering drive system (2) according to any of the preceding claims, **characterized in that** an infeed device (58) is assigned to each drive unit (3), wherein the infeed device (58) can bring the drive unit (3) into a frictional and driving contact between its drive element (7) and the wheel of a vehicle to be driven, in particular by a guided linear or pivoting movement.

14. Maneuvering drive system (2) according to claim 13, **characterized in that** the infeed device (58) comprises a spindle drive (59) with a shaft joint (60), by means of which the drive unit (3) can be brought into a frictional and driving contact between the drive element (7) and the wheel of the vehicle (1) to be driven, wherein, in particular, the infeed device (58) comprises an infeed motor (69), by means of which the infeed movement can be carried out in a motorized manner, and/or wherein, in particular, the infeed device (58), in particular the infeed motor (69), is connected to the control device (56) associated with a respective drive unit (3), and/or wherein, in particular, the infeed device (58) comprises a weather-resistant and/or watertight infeed housing, which surrounds at least the infeed motor (69), and/or wherein, in particular, the infeed device (58) comprises actuating means for manually actuating the movement of the drive unit (3), wherein the actuating means in particular comprise an engagement contour (62, 63) in order to bring a corresponding tool into engagement for moving the spindle.

15. Vehicle, in particular vehicle without its own drive, comprising a maneuvering drive system (2) according to any of the preceding claims.

## Patentansprüche

1. Manövrierantriebssystem (2) für ein Fahrzeug, insbesondere für ein Fahrzeug ohne eigenen Antrieb, vorzugsweise für einen Anhänger, mit mindestens zwei, insbesondere genau zwei Antriebseinheiten (3), die dazu ausgelegt sind, an einem Fahrzeug angebracht zu werden, um ein Rad des Fahrzeugs anzutreiben, wobei jede Antriebseinheit (3) umfasst
- einen Trägerkörper (4),
- ein Antriebselement (7), das am Trägerkörper (4) um eine Drehachse (X) drehbar gelagert ist und so ausgebildet und angeordnet ist, dass es zum Antrieb des Fahrzeugs mit einem Rad des Fahrzeugs in Anlage gebracht werden kann,
- einen elektrischen Antriebsmotor (10), der am Trägerkörper (4) angebracht ist und eine Motorachse (Y) definiert,
- Übertragungsmittel, die so ausgebildet und angeordnet sind, dass eine Drehbewegung der Motorwelle (12) des elektrischen Antriebsmotors (10) in eine Drehbewegung des Antriebselements (7) umgewandelt wird,
wobei der Antriebsmotor (10) außerhalb des Antriebselements (7) angeordnet ist und die Motorachse (Y) des Antriebsmotors (10) parallel zur Drehachse (X) des Antriebselements (7) verläuft, **dadurch gekennzeichnet, dass z**umindest ein Teil der Getriebemittel, insbesondere ein Planetengetriebe (20) der Getriebemittel, radial und axial innerhalb des Antriebselements (7) angeordnet ist.

2. Manövrierantriebssystem (2) nach Anspruch 1, **dadurch gekennzeichnet, dass** die Getriebemittel ein Planetengetriebe (20) mit mindestens einer Getriebestufe, insbesondere genau zwei Getriebestufen, umfassen, wobei jede Getriebestufe ein Sonnenrad, mehrere Planetenräder (20), die drehbar an einem Planetenradträger (26, 27) gehalten sind, sowie ein Hohlrad, wobei die Planetenräder (20) mit dem Sonnenrad und mit dem Hohlrad der jeweiligen Getriebestufe in Eingriff stehen.

3. Manövrierantriebssystem (2) nach Anspruch 2, **dadurch gekennzeichnet, dass** das Planetengetriebe (20) axial und radial innerhalb des Antriebselements (7) angeordnet ist, und/oder dass das Sonnenrad bzw. die Sonnenräder und der Planetenträger bzw. die Planetenträger sowie das Hohlrad bzw. die Hohlräder koaxial zur Drehachse (X) des Antriebselements (7) angeordnet sind, und/oder dass das Sonnenrad (22) einer ersten Getriebestufe drehfest mit einer Eingangswelle (18) gekoppelt ist, die am Trägerkörper (4) drehbar gelagert ist, und das Hohlrad (29) einer letzten Getriebestufe, insbesondere einer zweiten Getriebestufe des Planetengetriebes (20), drehfest mit dem Antriebselement (7) gekoppelt ist.

4. Manövrierantriebssystem (2) nach Anspruch 2 oder 3, **dadurch gekennzeichnet, dass** der Planetenradträger (26, 27) jeder Getriebestufe drehfest mit dem Trägerkörper (4) verbunden ist.

5. Manövrierantriebssystem (2) nach einem der Ansprüche 2 bis 4, **dadurch gekennzeichnet, dass** das Planetengetriebe mehrere Getriebestufen umfasst und das Hohlrad (29) einer Getriebestufe drehfest mit dem Sonnenrad (23) der nächsten Getriebestufe gekoppelt ist.

6. Manövrierantriebssystem (2) nach einem der Ansprüche 2 bis 5, **dadurch gekennzeichnet, dass** das Planetengetriebe (20) ein insbesondere zylinderförmiges Getriebegehäuse (21) mit kreisförmigem Querschnitt umfasst, welches Getriebegehäuse (21) axial und radial innerhalb des Antriebselements (7) angeordnet ist und drehfest mit dem Trägerkörper (4) verbunden ist.

7. Manövrierantriebssystem (2) nach Anspruch 4 und Anspruch 6, **dadurch gekennzeichnet, dass** der/die Planetenradträger (26, 27) drehfest am Getriebegehäuse (21) befestigt ist/sind.

8. Manövrierantriebssystem (2) nach einem der vorstehenden Ansprüche, **dadurch gekennzeichnet, dass** die Übertragungsmittel eine Getriebeanordnung (13) umfassen, mittels derer eine Drehbewegung der Motorwelle (12) des Antriebsmotors (10) in eine Drehbewegung einer Antriebswelle (18) umgesetzt wird, die konzentrisch zur Drehachse (X) des Antriebselements (7) angeordnet ist, wobei die Getriebeanordnung (13) insbesondere ein Stirnradgetriebe (14) mit mehreren miteinander in Eingriff stehenden Zahnrädern (15, 16, 17) umfasst und/oder wobei die Getriebeanordnung (13) insbesondere einen Zugantrieb, bevorzugt einen Zahnriemenantrieb oder einen Kettenantrieb, umfasst.

9. Manövrierantriebssystem (2) nach einem der vorstehenden Ansprüche, **dadurch gekennzeichnet, dass** es ferner einen Bremsmechanismus (50) umfasst, der so ausgelegt und angeordnet ist, dass er eine Bewegung des Antriebselements (7) selektiv blockiert, wobei, insbesondere, der Bremsmechanismus (50) axial und radial innerhalb des Antriebselements (7) angeordnet ist, und/oder wobei, insbesondere, der Bremsmechanismus (50) als elektromagnetische Bremse ausgebildet ist oder eine solche umfasst.

10. Manövrierantriebssystem (2) nach Anspruch 9, **dadurch gekennzeichnet, dass** die Bremsvorrichtung (50) eine bewegliche Reibplattte (51) umfasst, die drehfest am Trägerkörper (4) gelagert ist, und eine Reibscheibe (52), die drehfest an einer Eingangs welle (18), insbesondere an einer Eingangswelle (18) eines Planetengetriebes (20), oder einstückig mit einer Eingangswelle (18) ausgebildet ist, wobei die Reibplatte (51) zwischen einer Ausrückstellung, in der die Reibplatte (51) keinen Kontakt mit der Reibscheibe (52) hat, sodass sich die Eingangswelle (18) drehen kann, und einer Sperrstellung, in der die Reibplatte (51) gegen die Reibscheibe (52) drückt, insbesondere die Reibscheibe (52) gegen eine Gegenplatte (53) drückt, die drehfest mit dem Trägerkörper (4) verbunden ist, um eine Drehbewegung der Eingangswelle (18) und folglich des Antriebselements (7) zu sperren, bewegbar ist, wobei, insbesondere, die Reibplatte (51) insbesondere mittels Federelementen (55) in Richtung ihrer Sperrstellung vorgespannt ist, und/oder wobei, insbesondere, Betätigungsmittel, vorzugsweise in Form einer Spulenanordnung (54), vorgesehen sind, um die Reibplatte (51) in Richtung ihrer Freigabestellung zu bewegen.

11. Manövrierantriebssystem (2) nach einem der vorstehenden Ansprüche, **dadurch gekennzeichnet, dass** der Trägerkörper (4) einen C-förmigen Querschnitt (6) aufweist, wobei das Antriebselement (7) zwischen den C-Schenkeln (9) drehbar gehalten ist und/oder die Außenumfangsfläche des Antriebselements (7) aus den C-Schenkeln (9) herausragt, und/oder **dass** der elektrische Antriebsmotor (10) ein bürstenloser Motor ist und/oder einen Außenrotor aufweist, und/oder **dass** der Antriebsmotor (10) keine Rotor-Informationserfassungsvorrichtung wie beispielsweise Hall-Sensoren aufweist, und/oder **dass** jede Antriebseinheit (3) eine Steuervorrichtung (56) umfasst, die insbesondere ein Kommunikationsmodul aufweist, wobei die Steuervorrichtung (56) an der Antriebseinheit (3) befestigt oder in diese integriert ist, wobei, insbesondere, die Steuervorrichtung (56) direkt an eine Batterie angeschlossen ist, und/oder wobei, insbesondere, die Steuervorrichtung (56) einer Antriebseinheit (3) als Master-Steuervorrichtung (56) ausgebildet ist, die mit einer Fernbedienungseinheit (57) kommunizieren kann, und eine oder mehrere Steuervorrichtungen (56) der anderen Antriebseinheit(s) (3) als Slave-Steuergerät(e) (56) ausgebildet ist/sind, so dass es/sie mit dem Master-Steuergerät (56) kommunizieren kann/können, um von diesem Anweisungen zu erhalten, und/oder wobei, insbesondere, jedes Steuergerät (56) direkt mit einer Fernbedienung (57) kommunizieren kann.

12. Manövrierantriebssystem (2) nach Anspruch 11, **dadurch gekennzeichnet, dass** der elektrische Antriebsmotor (10) ein bürstenloser Motor mit einem Außenrotor ist, wobei der bürstenlose Motor vorzugsweise keine Rotor-Informationserfassung wie beispielsweise Hall-Sensoren aufweist.

13. Manövrierantriebssystem (2) nach einem der vorstehenden Ansprüche, **dadurch gekennzeichnet, dass** jeder Antriebseinheit (3) eine Zuführeinrichtung (58) zugeordnet ist, wobei die Zuführeinrichtung (58) die Antriebseinheit (3) in einen reibschlüssigen und antreibenden Kontakt zwischen ihrem Antriebselement (7) und dem Rad eines anzutreibenden Fahrzeugs bringen kann, insbesondere durch eine geführte lineare oder schwenkbare Bewegung.

14. Manövrierantriebssystem (2) nach Anspruch 13, **dadurch gekennzeichnet, dass** die Zuführvorrichtung (58) einen Spindelantrieb (59) mit einer Spindelwelle (60) umfasst, mittels dessen die Antriebseinheit (3) in einen reibschlüssigen und antreibenden Kontakt zwischen dem Antriebselement (7) und dem Rad des anzutreibenden Fahrzeugs (1) gebracht werden kann, wobei, insbesondere, die Zuführvorrichtung (58) einen Zuführmotor (69) umfasst, mittels dessen die Zuführbewegung motorisch ausgeführt werden kann, und/oder wobei, insbesondere, die Zuführvorrichtung (58), bevorzugt der Zuführmotor (69), mit der einer jeweiligen Antriebseinheit (3) zugeordneten Steuervorrichtung (56) verbunden ist, und/oder wobei, insbesondere, die Zuführvorrichtung (58) ein witterungsbeständiges und/oder wasserdichtes Zuführgehäuse umfasst, das zumindest den Zuführmotor (69) umgibt, und/oder wobei, insbesondere, die Zuführvorrichtung (58) Betätigungsmittel zum manuellen Betätigen der Bewegung der Antriebseinheit (3) umfasst, wobei die Betätigungsmittel insbesondere eine Eingriffskontur (62, 63) umfassen, um ein entsprechendes Werkzeug zum Bewegen der Spindel in Eingriff zu bringen.

15. Fahrzeug, insbesondere Fahrzeug ohne eigenen Antrieb, mit einem Manövrierantriebssystem (2) gemäß einem der vorstehenden Ansprüche.

## Revendications

1. Système d'entraînement de manœuvre (2) pour un véhicule, en particulier pour un véhicule dépourvu de propre entraînement, de préférence pour une remorque, comprenant au moins deux, en particulier exactement deux unités d'entraînement (3), qui sont conçues pour être fixées à un véhicule afin d'entraîner une roue de celui-ci, chaque unité d'entraînement (3) comprenant
- un corps de support (4),
- un élément d'entraînement (7), qui est monté de manière rotative autour d'un axe de rotation (X) sur le corps de support (4) et qui est conçu et agencé de telle sorte qu'il puisse être mis en butée contre une roue du véhicule pour entraîner ce dernier,
- un moteur d'entraînement électrique (10), qui est monté sur le corps de support (4) et qui définit un axe de moteur (Y),
- des moyens de transmission, qui sont conçus et agencés de telle sorte qu'un mouvement de rotation de l'arbre moteur (12) du moteur d'entraînement électrique (10) soit converti en un mouvement de rotation de l'élément d'entraînement (7),
dans lequel le moteur d'entraînement (10) est disposé à l'extérieur de l'élément d'entraînement (7) et l'axe du moteur (Y) du moteur d'entraînement (10) s'étend parallèlement à l'axe de rotation (X) de l'élément d'entraînement (7), **caractérisé en ce qu'**au moins une partie des moyens de transmission, en particulier un engrenage planétaire (20) des moyens de transmission, est disposée radialement et axialement à l'intérieur de l'élément d'entraînement (7).

2. Système d'entraînement de manœuvre (2) selon la revendication 1, **caractérisé en ce que** les moyens de transmission comprennent un engrenage planétaire (20) comportant au moins un étage d'engrenage, en particulier exactement deux étages d'engrenage, dans lequel chaque étage d'engrenage comprend une roue solaire, une pluralité de pignons planétaires (20), qui sont maintenus de manière rotative sur un porte-pignons planétaires (26, 27), et une couronne creuse, les pignons planétaires (20) étant en prise avec le pignon solaire et avec la couronne creuse de l'étage d'engrenage respectif.

3. Système d'entraînement de manœuvre (2) selon la revendication 2, **caractérisé en ce que** l'engrenage planétaire (20) est disposé axialement et radialement à l'intérieur de l'élément d'entraînement (7), et/ou **en ce que** le ou les pignons solaires, le ou les porte-pignons planétaires et le ou les couronnes creuses sont disposés coaxialement à l'axe de rotation (X) de l'élément d'entraînement (7), et/ou **en ce que** la roue solaire (22) d'un premier étage d'engrenage est couplée de manière solidaire en rotation à un arbre d'entrée (18), qui est maintenu de manière rotative sur le corps de porte-pignons planétaires (4), et la couronne creuse (29) d'un dernier étage d'engrenage, en particulier d'un deuxième étage d'engrenage du train d'engrenages planétaires (20), est couplée de manière solidaire en rotation à l'élément d'entraînement (7).

4. Système d'entraînement de manœuvre (2) selon la revendication 2 ou 3, **caractérisé en ce que** le porte-pignons planétaires (26, 27) de chaque étage d'engrenage est relié de manière solidaire en rotation au corps de support (4).

5. Système d'entraînement de manœuvre (2) selon l'une quelconque des revendications 2 à 4, **caractérisé en ce que** l'engrenage planétaire comprend plusieurs étages d'engrenage et **en ce que** la couronne creuse (29) d'un étage d'engrenage est couplée de manière solidaire en rotation à la roue solaire (23) de l'étage d'engrenage suivant.

6. Système d'entraînement de manœuvre (2) selon l'une quelconque des revendications 2 à 5, **caractérisé en ce que** l'engrenage planétaire (20) comprend un carter d'engrenage (21), notamment en forme de cylindre à section circulaire, lequel carter d'engrenage (21) est disposé axialement et radialement à l'intérieur de l'élément d'entraînement (7) et est relié au corps de support (4) de manière solidaire en rotation.

7. Système d'entraînement de manœuvre (2) selon les revendications 4 et 6, **caractérisé en ce que** le ou les porte-pignons planétaires (26, 27) sont fixés de manière solidaire en rotation au carter d'engrenage (21).

8. Système d'entraînement de manœuvre (2) selon l'une quelconque des revendications précédentes, **caractérisé en ce que** les moyens de transmission comprennent un dispositif d'engrenage (13) au moyen duquel un mouvement de rotation de l'arbre moteur (12) du moteur d'entraînement (10) est converti en un mouvement de rotation d'un arbre d'entraînement (18) disposé concentriquement à l'axe de rotation (X) de l'élément d'entraînement (7), dans lequel, en particulier, le dispositif d'engrenage (13) comprend un engrenage droit (14) comportant une pluralité de roues dentées (15, 16, 17) en prise les unes avec les autres, et/ou dans lequel, en particulier, le dispositif d'engrenage (13) comprend un entraînement par traction, en particulier un entraînement par courroie crantée ou un entraînement par chaîne.

9. Système d'entraînement de manœuvre (2) selon l'une quelconque des revendications précédentes, **caractérisé en ce qu'**il comprend en outre un mécanisme de freinage (50), qui est conçu et agencé pour bloquer de manière sélective un mouvement de l'élément d'entraînement (7), dans lequel, en particulier, le mécanisme de freinage (50) est disposé axialement et radialement à l'intérieur de l'élément d'entraînement (7), et/ou dans lequel, en particulier, le mécanisme de freinage (50) est réalisé sous la forme d'un frein électromagnétique ou comprend un frein électromagnétique.

10. Système d'entraînement de manœuvre (2) selon la revendication 9, **caractérisé en ce que** le mécanisme de freinage (50) comprend une plaque de friction mobile (51), qui est monté de manière fixe en rotation sur le corps de support (4), et d'un disque de friction (52), qui est monté de manière fixe en rotation sur un arbre d' d'entrée (18), en particulier sur un arbre d'entrée (18) d'un engrenage planétaire (20), ou est réalisé d'un seul tenant avec un arbre d'entrée (18), la plaque de friction (51) pouvant être déplacée entre une position de débrayage, dans laquelle la plaque de friction (51) n'est pas en contact avec le disque de friction (52) de sorte que l'arbre d'entrée (18) peut tourner, et une position de blocage, dans laquelle la plaque de friction (51) appuie contre le disque de friction (52), en particulier presse le disque de friction (52) contre une contre-plaque (53), qui est reliée de manière solidaire en rotation au corps de support (4), afin de bloquer un mouvement de rotation de l'arbre d'entrée (18) et, par conséquent, de l'élément d'entraînement (7), dans laquelle, en particulier, la plaque de friction (51) est sollicitée vers sa position de blocage, notamment au moyen d'éléments à ressort (55), et/ou dans laquelle, en particulier, des moyens d'actionnement sont prévus, de préférence sous la forme d'un ensemble de bobines (54), afin de déplacer la plaque de friction (51) vers sa position de déblocage.

11. Système d'entraînement de manœuvre (2) selon l'une quelconque des revendications précédentes, **caractérisé en ce que** le corps de support (4) comprend une section en forme de C (6), dans laquelle l'élément d'entraînement (7) est maintenu de manière rotative entre les branches (9) du C et/ou la surface circonférentielle extérieure de l'élément d'entraînement (7) fait saillie au-delà des branches (9) du C, et/ou **en ce que** le moteur d'entraînement électrique (10) est un moteur sans balais et/ou comporte un rotor externe, et/ou **en ce que** le moteur d'entraînement (10) ne comporte pas de dispositif de détection d'informations sur le rotor, tel que des capteurs à effet Hall, et/ou **en ce que** chaque unité d'entraînement (3) comprend un dispositif de commande (56) comportant notamment un module de communication, lequel dispositif de commande (56) est fixé à l'unité d'entraînement (3), dans lequel, en particulier, le dispositif de commande (56) est directement connecté à une batterie, et/ou dans lequel, en particulier, le dispositif de commande (56) d'une unité d'entraînement (3) est conçu comme un dispositif de commande maître (56), capable de communiquer avec une télécommande (57), et le ou les dispositifs de commande (56) de l'autre ou des autres unités d'entraînement(s) (3) est/sont conçu(s) comme dispositif(s) de commande esclave(s) (56) de manière à pouvoir communiquer avec le dispositif de commande maître (56) afin de recevoir des instructions de ce dernier, et/ou dans lequel, en particulier, chaque dispositif de commande (56) est capable de communiquer directement avec une unité de commande à distance (57).

12. Système d'entraînement de manœuvre (2) selon la revendication 11, **caractérisé en ce que** le moteur électrique (10) est un moteur sans balais doté d'un rotor externe, le moteur sans balais ne comportant de préférence pas de dispositif de détection d'informations du rotor tel que des capteurs à effet Hall.

13. Système d'entraînement de manœuvre (2) selon l'une quelconque des revendications précédentes, **caractérisé en ce qu'**un dispositif d'avancement (58) est associé à chaque unité d'entraînement (3), le dispositif d'avancement (58) pouvant amener l'unité d'entraînement (3) en contact de friction et d'entraînement entre son élément d'entraînement (7) et la roue d'un véhicule à entraîner, en particulier par un mouvement linéaire guidé ou pivotant.

14. Système d'entraînement de manœuvre (2) selon la revendication 13, **caractérisé en ce que** le dispositif d'avancement (58) comprend un entraînement à broche (59) avec un accouplement d'arbre (60), au moyen duquel l'unité d'entraînement (3) peut être amenée en contact par friction et d'entraînement entre l'élément d'entraînement (7) et la roue du véhicule (1) à entraîner, dans lequel, en particulier, le dispositif d'avancement (58) comprend un moteur d'alimentation (69), au moyen duquel le mouvement d'avancement peut être effectué de manière motorisée, et/ou dans lequel, en particulier, le dispositif d'avancement (58), en particulier le moteur d'avancement (69), est relié au dispositif de commande (56) associé à une unité d'entraînement (3) respective, et/ou dans lequel, en particulier, le dispositif d'avancement (58) comprend un boîtier d'alimentation résistant aux intempéries et/ou étanche à l'eau, qui entoure au moins le moteur d'avancement (69), et/ou dans lequel, en particulier, le dispositif d'avancement (58) comprend des moyens d'actionnement pour actionner manuellement le mouvement de l'unité d'entraînement (3), les moyens d'actionnement comprenant notamment un contour d'engagement (62, 63) afin d'engager un outil correspondant pour déplacer la broche.

15. Véhicule, en particulier véhicule sans propulsion propre, comprenant un système d'entraînement de manœuvre (2) selon l'une quelconque des revendications précédentes.
